(19) Europäisches Patentamt
European Patent Office
Office européen des brevets

(11) EP 4 492 490 A1

(12) **EUROPEAN PATENT APPLICATION**

(43) Date of publication:
**15.01.2025 Bulletin 2025/03**

(21) Application number: **24187328.0**

(22) Date of filing: **09.07.2024**

(51) International Patent Classification (IPC):
***H01M 4/131*** *(2010.01)* ***H01M 4/1391*** *(2010.01)*
***H01M 4/62*** *(2006.01)* ***H01M 10/0525*** *(2010.01)*
*H01M 4/02* *(2006.01)*

(52) Cooperative Patent Classification (CPC):
**H01M 4/622; H01M 4/131; H01M 4/1391; H01M 4/625; H01M 10/0525;** H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 SE 2350890**

(71) Applicant: **Northvolt AB**
**112 47 Stockholm (SE)**

(72) Inventors:
- **Mangesh Korde, Prasad**
  **723 37 Västerås (SE)**
- **Alshikh-Ali, Manal**
  **723 46 Västerås (SE)**

(74) Representative: **Engman, Eva Jessica**
**Northvolt AB**
**Alströmergatan 20**
**112 47 Stockholm (SE)**

(54) **BINDER FOR A SECONDARY CELL**

(57) A binder for a cathode in a secondary cell, wherein the binder comprises an elastomeric polyurethane; a cathode material as well as a cathode comprising said binder; a method to produce said cathode; a secondary cell comprising said cathode; and a vehicle comprising said secondary cell.

FIGURE 4

a)

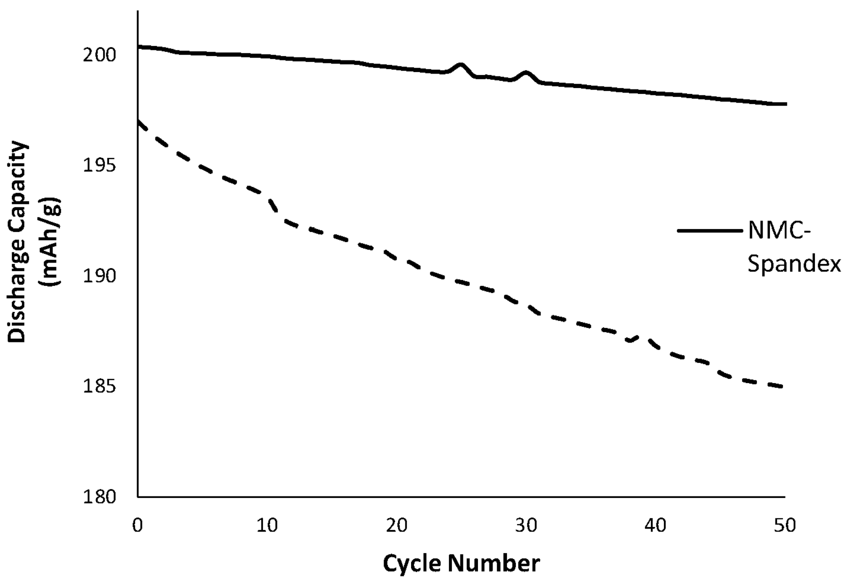


EP 4 492 490 A1

## Description

FIELD OF THE DISCLOSURE

The present disclosure relates to a binder for a cathode in a secondary cell. More particularly, the present disclosure relates to a cathode binder comprising an elastomeric polyurethane, a cathode material as well as a cathode comprising said binder, a method to produce said cathode, a secondary cell comprising said cathode, as well as a vehicle comprising said secondary cell.

TECHNICAL BACKGROUND

Rechargeable batteries having high energy density and discharge voltage, in particular Li-ion batteries, are a vital component in portable electronic devices and are a key enabler for the electrification of transport and large-scale storage of electricity. To reach higher energy densities, new types of batteries are being developed.

State of the art Li-ion batteries typically consist of stacks of secondary cells, wherein each cell is composed of a cathode comprising a cathode current collector, an electrolyte, an anode comprising an anode current collector, and optionally a separator positioned between the anode and cathode.

One of the limiting factors of the Li-ion battery is its cathode. In secondary cells where the anode is made of graphite-based materials, the cations extracted from the cathode material diffuse from the cathode material through the electrolyte and intercalate into the graphite material at the anode during charging. During discharge, this process is reversed. Regardless of the constitution of the cathode, this repeat process will tear on the cathode material, resulting in metal dissolution into the electrolyte. The coating of the cathode material is vital in reducing metal dissolution and prolonging cycle life.

Attempts have been made to use a binder to achieve better adherence of the cathode material and conducting agent and thereby improve the mechanical strength of the cathode. Conventional binders used for electrodes in batteries are polyvinylidene fluoride (PVDF), copolymers of vinylidene difluoride (VdF) and hexafluoropropene (HFP) monomers (Kynar or KynarFlex), carboxymethylcellulose (CMC) and its sodium salt (CMC-Na), poly(acrylic acid) (PAA) and its sodium salt (PAA-Na), and styrene-butadiene rubber (SBR). All of these have their inherent drawbacks, for example high fluoride content, and sodium carboxymethylcellulose and poly(acrylic acid) are rather brittle.

Hence, there is a need for improving the mechanical integrity of electrodes, cathodes in particular, and at the same time improving the electric conductivity. An improved mechanical integrity contributes to an increased cycle life, which is desired.

LIST OF ABBREVIATIONS

C - charge rate
CC - constant current
CMC - carboxymethyl cellulose
CNT - carbon nanotubes
CNF - carbon nanofibers
CV - constant voltage
den - denier
HNBR - hydrogenated nitrile butadiene rubber
ICP-MS - inductively coupled plasma mass spectrometry
LFP - lithium iron phosphate
LMNO - lithium manganese nickel oxide
LMO - lithium manganese oxide
M - molar
min - minute
NBP - 1-butylpyrrolidin-2-one
NMC - nickel manganese cobalt oxide
NMCA - nickel cobalt manganese aluminum
NMP - *N*-methyl-2-pyrrolidone
PTFE - polytetrafluoroethylene
PVDF - polyvinylidene fluoride
s - second

TEM - transmission electron microscopy
V - volt

## SUMMARY OF THE DISCLOSURE

An object of the present disclosure is to provide a binder for a cathode in a secondary cell, wherein the binder may provide an improved electric conductivity and good mechanical strength to maintain the structure of the cathode over time. A further object is the provision of a cathode with an improved electrochemical performance and cycle life while at the same time being more environmentally benign, cheaper and safer to assemble.

The present disclosure provides a binder combination for a cathode in a secondary cell, wherein the binder comprises elastomeric polyurethane, and a method to prepare such a cathode.

## BRIEF DESCRIPTION OF THE DRAWINGS

Figure 1 shows a TEM images of a) a cathode material comprising a PVDF binder mixed with conductive material and active material, and b) a cathode material according to the present disclosure comprising a spandex binder mixed with conductive material and active material.
Figure 2 shows the difference in peel strength between NMC and LFP cathodes, each comprising either PVDF and spandex binders, and one cathode without binder (LFP-W).
Figure 3 shows the difference in capacity retention between a) two NMC cathodes comprising a PVDF binder and a spandex binder, respectively, during discharge rate tests, and b) the difference in capacity retention between two LFP cathodes comprising a PVDF binder and a spandex binder, respectively, during discharge rate tests.
Figure 4 shows the difference in a) discharge capacity and b) capacity retention, between cathodes comprising different binders over 50 cycles.

## DETAILED DESCRIPTION OF THE DISCLOSURE

In a first aspect, the present disclosure relates to a cathode binder for a secondary cell, wherein the binder comprises elastomeric polyurethane.

### Polyurethane

The elastomeric polyurethane of the disclosure is environmentally benign compared to commonly used binder components, such as fluorinate PVDF or PTFE. Replacing such fluorinated binder components with an elastomeric polyurethane binder reduces the environmental impact of cells. In addition, the elastomeric polyurethane binder may be produced from recycled materials, further reducing the environmental impact.

Preferably, the cathode binder comprises about 10-100 wt% elastomeric polyurethane, for example about 20-100 wt%, about 30-100 wt%, about 40-100 wt%, about 50-100 wt%, about 60-100 wt%, or about 70-100 wt% elastomeric polyurethane.

Even more preferably, the cathode binder comprises 90wt% or more elastomeric polyurethane, for instance 95wt% or more, or 98wt% or more. In some embodiments, the cathode binder consists of the elastomeric polyurethane.

In an embodiment, the cathode binder comprises an elastomeric polyurethane and additives.

The cathode binder may comprise up to 10wt% additives, for instance 5wt% or 2wt%. In the context of the disclosure, "additives" are compounds typically included to improve the physical properties of the binder.

Polymer formulations comprising elastomeric polyurethane available from commercial suppliers often comprises additives. These additives may be stabilizers, residual solvent, delusterants, antioxidants, dispersants and/or lubricants for example.

An example of a residual solvent is dimethylacetamide.

An example of a delusterant is titanium dioxide.

An example of a lubricant is polydimethylsiloxane or a clay such as hydroxylated hydrotalcite.

Preferably, the cathode binder is free from delusterant such as titanium dioxide and residual solvent (such as dimethylacetamide). These additives can have a detrimental on the function of the elastomeric polyurethane, for instance it may reduce the adhesion of the cathode material and the substrate.

In a preferred embodiment, the cathode binder comprises elastomeric polyurethane and does not comprise at least one of delusterant and residual solvent (such as, respectively, titanium dioxide and dimethylacetamide).

For example, the cathode binder may comprise 90 wt% or more elastomeric polyurethane, for instance 95 wt% or more, or 98 wt% elastomeric polyurethane and does not comprise at least one of delusterant and residual solvent (such as, respectively, titanium dioxide and dimethylacetamide).

In some embodiments, the cathode binder comprises an antioxidant. Antioxidants are typically not detrimental to the properties of the cathode material.

In some embodiments, the binder contains up to 5% by weight, or up to 3 wt% such as 0.1-3wt% antioxidant, 0.2-3wt% antioxidant, 0.3 to 3 wt% antioxidant, 0.5 to 3 wt% antioxidant, 1 to 2.5 wt% antioxidant, or 1.5 to 2.5 wt% antioxidant

In some embodiments, the binder contains up to 5% by weight, or up to 3 wt% such as from 0.1 to 2 wt% or even 0.1 to 1 wt%, of a lubricant. Lubricants are typically added to the elastomeric polyurethane during production, for instance to aid in formation of the polymer during processes such as extrusion. These additives are typically not detrimental to the binder if present in small amounts.

In some embodiments, the binder contains up to 5% by weight, or from 0.1-3 wt% such as from 0.1-2 wt% or even 0.1 to 1 wt%, of polydimethylsiloxane.

In some embodiments, the binder contains up to 5% by weight, or from 0.1-3 wt% such as from 0.1-2 % by weight or even 0.1 to 1 wt%, of a clay such as hydroxylated hydrotalcite.

Dispersant

A particularly preferred additive is a dispersant.

Thus. the binder according to the present disclosure preferably comprises an elastomeric polyurethane such as spandex and a dispersant such as hydrogenated nitrile butadiene rubber (HNBR).

Hydrogenated nitrile butadiene rubber (HNBR) binder, hydrogenated nitrile butadiene rubber binder and HNBR binder may be used interchangeably.

The acrylonitrile content in HNBR may be from 17% to 50%, for example from 30% to 45%, such as from 35% to 43%, for example from 37% to 41%.

The hydrogenation process may be incomplete. Incomplete hydrogenation means that residual double bonds may be present in the HNBR. For example, the HNBR may comprise a maximum of 10% residual double bonds, for example a maximum of 7.5%, such as a maximum of 5%, for example a maximum of 2.5%, such as a maximum of 1%. The content of residual double bonds in HNBR may be determined using IR spectroscopy.

The HNBR of the present disclosure typically has a weight-average molecular weight $M_w$ in the range of from about 50,000 to about 500,000 (measured by gel permeation chromatography (GPC) for polystyrene equivalents). For example, the HNBR has a $M_w$ from about 75,000 to about 250,000, such as from about 100,000 to about 200,000, for example from about 125,000 to about 175,000.

HNBR may be obtained from a supplier.

For example, Arlanxeo sells HNBR under the tradename Therman® with product codes such as AT3904, AT3443, AT3404, and LT2004. Of these, AT3904 is preferred.

Presence of a dispersant such as HNBR in the binder together with an elastomeric polyurethane (such as spandex fibers) improves the uniformity of the cathode as the dispersion of the cathode material before coating is more uniform. This can be observed by comparing a cathode material comprising a PVDF binder, as shown in figure 1a, with a cathode material according to the present disclosure comprising a spandex binder, as shown in figure 1b. In fact, the inventors surprisingly found that the present spandex binder forms a film around the active material. This not the case for a conventional PVDF binder. The uniformity of the binder and its film forming property contributes to reducing metal dissolution from the cathode. The binder according to the present disclosure provides for a reduction of metal dissolution of up to 175% in an NMC cathode, as compared to an NMC cathode with a conventional PVDF binder. This is demonstrated in example 1. The reduced transition metal dissolution has a positive effect on the life cycle of the cell. This has been shown in Example 4 and figures 4a and 4b.

Additionally, a binder according to the present disclosure, preferably comprising an elastomeric polyurethane such as spandex and a dispersant such as HNBR, provides for an improved particle-particle cohesion and also a better adhesion to the substrate. This has been shown in example 2 and in figure 2. The elastomeric polyurethane such as spandex fibers also improve flexibility of the cathode, which is not usually associated with improved particle-particle adhesion. Good flexibility of the cathode is an important feature, especially in cylindrical cells.

In a preferred embodiment, the binder comprises an elastomeric polyurethane and HNBR.

The binder composition typically comprises from about 95 wt% to about 99.9 wt% elastomeric polyurethane, for example from about 98 wt% to about 99.9 wt%, such as from about 98.5 wt% to about 99.8 wt%, for example from about 99 wt% to about 99.5 wt%.

Additionally, the binder composition may comprise from about 0.1 wt% to about 5 wt% HNBR, for example from about 0.1 wt% to about 2 wt%, such as from 0.2 wt% to about 1.5 wt%, for example from about 0.5 wt% to about 1 wt%.

The weight ratio between HNBR and elastomeric polyurethane is typically from 1:999 to 5:995, for example from 1:999 to 2:98, such as from 15:985 to 2:998, for example from 5:995 to 10:990.

In a preferred embodiment, the ratio between HNBR and elastomeric polyurethane is 5:995.

These binders may optionally also contain a lubricant such as PDMS, an antioxidant, or both which, when present, are included at up to 3 wt% in place of the elastomeric polyurethane.

Thus, preferred formulation of the binder of the disclosure comprises (or consists of):

from about 95 wt% to about 99.9 wt% elastomeric polyurethane;
from about 0.1 wt% to about 2 wt% HNBR;
optionally up to 3 wt% antioxidant;
optionally up to 3 wt% lubricant such as PDMS or clay.

A particularly preferred formulation of the binder of the disclosure comprises (or consists of):

from about 95 wt% to about 99.5 wt% elastomeric polyurethane;
from about 0.5 wt% to about 1 wt% HNBR;
optionally up to 3 wt% antioxidant;
optionally up to 1 wt% lubricant such as PDMS or clay.

The cathode binder of the disclosure comprising an elastomeric polyurethane is typically highly elastic.

The elastomeric polyurethane comprises a polyurethane-based polymer, wherein the polymer is a block copolymer.

Preferably, the elastomeric polyurethane comprises a segmented polyurethane-based polymer. The terms "segmented polyurethane-based polymer" and "segmented polyurethane" may be used interchangeably herein.

Polyurethane-based block copolymers of a 'rigid' or 'hard' and a 'soft' polymer provide the excellent elastic properties. Without wishing to be bound by theory, it is considered that on stretching, the soft polymer expands and on release, springs back to its original form. The 'rigid' polymer does not expand, and therefore maintains the structural integrity of the polymer whilst the soft polymer undergoes deformation. Block copolymers of this structure are also referred to as segmented polymers or segmented copolymers.

An example of a highly elastic segmented polyurethane-based polymer according to the disclosure is polyether-polyurea wherein the polyether is the 'soft' component and the polyurea is the 'rigid' component. The polyether-polyurea may in some embodiments be a polyether-polyurethane urea copolymer.

Preferably, the elastomeric polyurethane comprises a segmented polyurethane-based polymer.

In a preferred embodiment, the elastomeric polyurethane comprises 60-100wt% segmented polyurethane-based polymer. For instance, the elastomeric polyurethane comprises 70-95wt% segmented polyurethane-based polymer, such as 75-90wt, or 80-88wt%. Preferably the elastomeric polyurethane comprises at least 85 wt% segmented polyurethane-based polymer.

Preferably, the segmented polyurethane-based polymer comprises a polyether and polyurea. That is, preferably the binder is a polyether-polyurethane urea binder.

Preferably, the segmented polyurethane-based polymer consists of polyether and polyurea segments.

In one embodiment, the elastomeric polyurethane is a polyether-polyurethane copolymer, for example a polyether-polyurethane urea copolymer. That is, in some embodiments, the cathode binder comprises for instance a polyether-polyurea copolymer wherein preferably, the elastomeric polyurethane binder is a block-copolymer, for instance a block copolymer of polyether and polyurea (i.e. a polyether-polyurethane urea copolymer).

Preferably, the soft segment has a melting point of < 5 or 6°C.

Preferably, the polyurethane-based polymer has a number average molecular weight of 50k-1000k Da, for instance 100k-800k Da, 200k-500k Da, 200k-400k Da or 300-350k Da. The number average molecular weight can be determined via gel permeation chromatography (GPC).

For example, GPC may be performed on a Shimadzu Prominence LC system equipped with an RI detector with a 300 mm $\times$ 75 mm, 5 $\mu$m PLgel 100 A and 300 mm $\times$ 7.5 mm, 5 $\mu$m PLgel 500 A column in series at 40 °C with a DMF eluent at 1.0 ml/min. The method can be calibrated with poly(styrene) standards with MW between 1000 and 10000.

A number average molecular weight within the defined range provides particularly beneficial results. For instance, improved peel strength, temperature stability and particle binding properties.

The properties of the segmented polymer may be controlled by varying the length and/or molecular weight of the hard and soft segments, and by controlling the weight percent or concentration of the hard/soft segments in the polymer.

In a conventional process of making segmented polyurethane-based polymers of polyether and polyurea, a glycol (diols of polyethers, polyesters or polycarbonates, including their copolymers or mixtures) is reacted with a diisocyanate in excess amount to form an isocyanate-terminated polyurethane or polyurethane urea prepolymer. This prepolymer is then diluted in a solvent and chain extended with a short chain diol or diamine to grow the polymer chain length. A terminator can be used to control the molecular weight of the polymer. In this type of conventional process, the soft segment is formed during the prepolymer formation stage and the hard segment is formed during the chain extension stage. Accordingly, the formed polymer chains consist only of alternating soft segments and hard segments.

The polyurethane-based polymer of the disclosure may comprise alternating hard and soft segments.

The polyurethane-based polymer of the disclosure may consist of alternating hard and soft segments. For example, the polyurethane-based polymer of the disclosure may consist of alternating polyurea and polyether segments.

The polyurethane-based polymer may be produced by an extended glycol process and/or under-capping process as disclosed in WO 2019/118604 A1. Such a process allows for the formation of a polymer wherein the molecular weight of the soft segment, even with the use of lower molecular weight glycol, can be increased without reducing molecular weight of the hard segment as typically observed in conventional prepolymer production processes.

The extended glycol process comprises two step reactions to make the isocyanate-terminated prepolymer.

In the first step, excess amount of a lower molecular weight glycol (typical MW < 2500) is used to react with a diisocyanate to form a hydroxy-terminated glycol, or an extended glycol with typical MW > 2500.

This extended glycol is further reacted with excess amount of a diisocyanate in the second step reaction to produce an isocyanate-terminated prepolymer or capped glycol.

The diisocyanate used in the first step reaction to make the extended glycol can be same or different from the diisocyanate used in the second step reaction to make the capped glycol prepolymer. This capped glycol based on the extended glycol is then dissolved in a solvent and chain extended with a diamine extender and a monoamine as the terminator to form a segmented polyurethane or polyurethane urea polymer with engineered soft segment and hard segment molecular weights.

The molecular weight of the extended glycol and the capping ratio thereafter in making the capped glycol prepolymer should be controlled in order to provide the desired molecular weight ratio (SSMW/HSMW) of the soft segment to the hard segment and the urea hard segment weight percent (HSWT%) for the segmented polyurethane or polyurethane ureas according to the present disclosure.

The under-capping process comprises adding controlled amount of a second diisocyanate to an isocyanated-terminated prepolymer which is produced by reacting a glycol at a low capping ratio (typically less than 1.50) with a first diisocyanate. The first diisocyanate and the second diisocyanate can be the same or different.

The mixture including the added second diisocyanate and the capped glycol prepolymer from the first diisocyanate is dissolved into a solvent, and a diol or diamine chain extender and a monoamine terminator are then added to produce the polyurethane or polyurethane urea polymer with engineered soft and hard segment molecular weights.

The capping ratio in making the capped glycol prepolymer and the amount of second diisocyanate added to the capped glycol should be controlled in order to provide the desired molecular weight ratio (SSMW/HSMW) of the soft segment to the hard segment and the urea hard segment weight percent (HSWT%) for the segment polyurethanes or polyurethane ureas according to the present disclosure.

In a preferred embodiment, the cathode binder comprises a polyurethane-based polymer comprising segments of polyether and polyurea, wherein the polymer is based on glycols with a number average molecular weight less than 2500 as measured by GPC. Preferably, the polymer has a molecular weight ratio of the soft segment to the hard segment larger than 12.0, and a urea hard segment weight percent less than 7.8%. The weight ratio of the soft and hard segments may be determined according to the methods outlined below.

For example, when the formed polymer chains consist only of alternating soft segments and hard segments, and the number average soft segment molecular weight and hard segment molecular weight of the polymer can be estimated mathematically as shown below:

$$SSMW = R \ X \ (MW_{gl} + MW_{di}) / (R-1) \qquad (1)$$

$$HSI« = R \ x \ (MW_{ex} + MW_{di}) \qquad (2)$$

where in equation (1) and (2), SSMW and HSMW stand for soft segment molecular weight and hard segment molecular weight, respectively; MWgl, MWdi and MWex represent the number average molecular weight of the glycol, the formula weight of the diisocyanate and the extender or their averages in the situation of mixed diisocyanates or extenders, respectively; and R in the equations is the capping ratio, the molar ratio of the diisocyanate to the glycol.

Combining equation (1) and (2) provides a correlation of the SSMW and the HSMW referred to as the segment molecular weight ratio, as shown in equation (3).

$$SSMW/HSMW = (1/(R-1)) x (MW_{gl} + MW_{di})/(MW_{ex} + MW_{di}) \qquad (3)$$

Based on equation (3), once the ingredient type is determined, such as poly(tetramethylene ether) glycol (PTMEG), methylene bis(4-phenylisocyanate) (MDI) and ethylenediamine (RDA), the SSMW and HSMW are dependent to each other with a function of the capping ratio R and the number average molecular weight of the glycol.

There are at least two ways of achieving a polymer with the preferred molecular weight distribution.

A first method comprises an extended glycol approach wherein a glycol with lower MW is extended to a higher MW before making the isocyanate-terminated prepolymer. This can be achieved by reacting excess glycol with a diisocyanate which functions as a linker connecting two or more glycol molecules. The desired molecular weight of the extended glycol is determined by the relative molar ratio (r> 1) of the glycol to the diisocyanate. The diisocyanate used for glycol extension can be the same or different from the diisocyanate used for making the prepolymer.

$$\text{Extended Glycol } MW_{egl} = (r \times MW_{gl} + MW_{di})/(r-1) \quad (4)$$

For example, to extend PTMEG from 1800 to 3500 MW with MDI, the r should be 2.2060. This extended glycol can be used for the conventional prepolymer formation and chain extension processes to provide the SSMW and HSMW following equation (1) and (2) except where the $MW_{gl}$ shall be substituted by the extended glycol $MW_{egl}$.

A second method comprises an under-capping process wherein a prepolymer is made for the desired soft segment MW and then an extra amount of diisocyanate is added into the capped glycol prepolymer prior to the chain extension step. In this process, the SSMW still follows equation (1) determined by the capping ratio R, and the HSMW is determined by the unreacted diisocyanate in the prepolymer and the extra amount of diisocyanate added into the prepolymer by equation (5). Again, the diisocyanate used to make the prepolymer and the diisocyanate added into the prepolymer for tuning the HSMW can be the same or different.

$$HSMW = Rx(MW_{ex} + MW_{di}) + K(R^2/(R-1))x(MW_{ex}, + MW_{xdi}) \qquad (5)$$

where K is the molar ratio of extra added diisocyanate to the original diisocyanate in making the prepolymer. The MWdi is the molecular weight of the extra added diisocyanate. In the event that the type of the extra amount of diisocyanate added before chain extension is the same as the type of the original diisocyanate used in making the prepolymer, then MWxdi is equal to MWdi.

The HSMW is very much dependent on how much extra diisocyanate is added into the prepolymer.

The weight percent of the soft segment content (SSWT%) in the polymer can be calculated by equation (6) based on the ingredient weights in making the prepolymer and the total weight of the polymer solids:

$$SSWT\% = (WT_{gl} + WT_{di}/R) \times 100 / WT_{polymer} \qquad (6)$$

where $WT_{gl}$ and $WT_{di}$ are the respective weight of the glycol (or extended glycol) and the diisocyanate, R is the molar ratio of the diisocyanate to the glycol (or the extended glycol) in making the isocyanate-terminated prepolymer, and WT polymer is the total weight of the polymer solids consisting of all components in making the segmented polyurethane or polyurethane urea.

Accordingly, the weight percent of the hard segment content in the polymer can be estimated by equation (7).

$$HSWT\%\ 100 - SSWT\% \qquad (7)$$

Preferably, the polyurethane-based polymer also has a number average molecular weight of 200k-500k Da, 200k-400k Da or 300k Da as measured by gel permeation chromatography.

The molecular weights referred to in this description, including the glycol molecular weight, the segmental molecular weights and the polymer molecular weight, are number average molecular weights.

In a non-limiting example, the polyurethane-based polymer may be prepared in a method comprising:

(a) adding a diisocyanate to a glycol at a capping ratio of less than 1.5 to produce an under-capped capped glycol;
(b) adding additional diisocyanate to the capped glycol; and
(c) adding a chain extender to produce the polymer with engineered hard and soft segment molecular weights;

wherein the glycol is polytetramethylene ether glycol (PTMEG).

Nonlimiting examples of diisocyanates useful in the present disclosure include 4,4'-methylene bis(phenyl isocyanate) (also referred to as 4,4-diphenylmethane diisocyanate (MDI)), 2,4'- methylene bis(phenyl isocyanate, 4,4'-rnethylenebis(cyclohexyl isocyanate), 1,4-xylenediisocyanate, 1,4-bis(isocyanatomethyl)cyclohexane, 2,6-toluenediisocyanate, 2,4- toluenediisocyanate, and mixtures thereof. Examples of specific diisocyanates include Takenate® 500 and FORTIMOO 1,4-116XDI (Mitsui Chemicals), Mondur® MB (Bayer), Lupranate® M (BASF), and Isonate® 125 MDR (Dow Chemical), and combinations thereof. Nonlimiting examples of glycols useful according to the present disclosure include polyether glycols such as poly(tetramethylene ether) glycols (PTMEG), copolyether glycols such as poly(tetramethyleneether-co-ethyleneether) glycol and poly(tetramethylene ether-co-2-methyltetramethylene ether) glycol, polyester and copolyester glycols such as polycaprolactone diol and those produced by condensation polymerization of aliphatic dicarboxylic acids and diols, or their mixtures, oflow molecular weights with no-more than 12 carbon atoms in each molecule, and polycarbonate glycols produced by condensation polymerization of aliphatic diols with phosgene, dialkylcarbonates or diarylcarbonates. Examples of specific commercially available glycols are Terathane® glycols (1NVISTA of Wichita, Kansas, USA), PTG-L glycols (Hodogaya Chemical Co., Ltd., Tokyo, Japan), ETERNACOLL® diols (Ube Industries, Ltd., Tokyo, Japan) and STEPANPOL® polyols (Stepan, Illinois, USA).

Nonlimiting examples of diamine chain extenders useful in making the segmented polyurethane ureas according to the present disclosure include one or more diamines selected from 1,2-ethylenediamine; 1,4-butanediamine; 1,2-butanediamine; 1,3-butanediamine; 1,3- diamino-2,2-dimethylbutane; 1,6-hexamethylenediamine; 1,12-dodecanediamine; 1,2- propanediamine; 1,3-propanediamine; 2-methyl-1,5-pentanediamine; 1-amino-3,3,5-trimethyl-5-aminomethylcyclohexane; 2,4-diamino- 1 -methylcyclohexane; N-methylamino-bis(3- propylamine); 1,2-cyclohexanediamine; 1,4-cyclohexanediamine; 4,4'-methylene-bis (cyclohexylamine); isophorone diamine; 2,2-dimethyl-1,3-propanediamine; meta-tetramethylxylenediarnine; 1,3-diamino-4-methylcyclohexane; 1,3-cyclohexane-diamine; 1,1- methylene-bis(4,4'-diaminohexane); 3-aminomethyl-3,5,5-trimethylcyclohexane; 1,3-pentanediamine(1,3-diaminopentane); m-xylylene diamine; and Jeffamine® (Texaco). When a segmented polyurethane with urethane hard segments is desired, the chain extender is a diol. Examples of such diols that may be used include, but are not limited to, ethylene glycol, 1,3- propanediol, 1,2-propylene glycol, 3-methyl-1,5-pentanediol, 2,2-dimethyl-1,3-trimethylene diol, 2,2,4-trimethyl-1,5-pentanediol, 2-methyl-2-ethyl-1,3-propanediol, 1,4-bis(hydroxyethoxy)benzene, and 1,4-butanediol and mixtures thereof.

Nonlimiting examples of useful chain terminators for the present disclosure include one or more monofunctional amines selected from ethylamine, propylamine, isopropylamine, n-butylamine, sec-butylamine, tert-butylamine, isobutylamine, isopentylamine, 1-hexylamine, 1-octylamine, 2-ethyl-1-hexaneamine, cyclohexylamine, N,N-diethylamine, N-ethyl-N-propylamine, N,N-diisopropylamine, N-tert-butyl-N-methylamine, N-tert-butyl-N-benzylamine, N,N-dicyclohexylamine, N-ethyl-N-isopropylamine, N-tertbutyl-N-isopropylamine, N-isopropyl-N-cyclohexylamine, N-ethyl-N-cyclohexylamine, N,Ndiethanolamine, and 2,2,6,6-tetramethylpiperidine.

A non-limiting example of the solvent used in the present disclosure is N,N-dimethylacetamide (DMAc).

In one nonlimiting embodiment, the process steps involved in making the segmented polyurethanes or polyurethane ureas of the present disclosure can be a batch process or a continuous process or their combinations. In one nonlimiting embodiment, an extended glycol is made by a batch process, which is further supplied to make the isocyanate-terminated capped glycol prepolymer and to make the polymer with chain extension and termination in a solvent by a continuous polymerization process. For another example, adding and mixing a diisocyanate to a capped glycol prepolymer in the under-capping process can be conducted in a batch process or a continuous process.

In another nonlimiting embodiment, steps involved in making an extended glycol and/or a capped glycol prepolymer are performed with heat, with or without the use of a catalyst, typically in a temperature range of 50 to 100°C.

In some nonlimiting embodiments, the process further comprises the step of extending a glycol of low molecular weight to a hydroxy-terminated polyurethane or polyurethaneurea or an extended glycol, prior to making an isocyanate-terminated or capped glycol prepolymer followed by chain extension, so that both molecular weights of the soft segment and the hard segment can be increased without limitation by the low molecular weight of the starting glycol.

In some nonlimiting embodiments, the process further comprises the step of adding an additional diisocyanate to an isocyanate-terminated or capped glycol prepolymer so that molecular weight of the hard segment is not affected by the low capping ratio prior to the addition of a chain extender.

Fibers of polyether-polyurea block copolymers are commonly referred to as Spandex, Elastane or Lycra. Spandex/elastane/Lycra are exemplary elastomeric polyurethane fibers according to the disclosure. Spandex/elastane/Lycra typically comprises at least 85% segmented polyurethane-based polymer, and may additionally comprise pigments, stabilizers, lubricants, antioxidants, other additives and solvents.

One example of an elastomeric polyurethane is spandex.

Spandex is a versatile material that is manufactured by a continuous two-step process where a prepolymer of choice having terminal isocyanates is reacted with a suitable diol, diamine or hydrazine. The production method allows for finetuning of the material depending on the specific need. Spandex fibers provide excellent adhesion, flexibility and chemical resistance that are all desired properties for binder materials. Spandex is not fluorinated, as compared to other binder materials, such as PVDF and PTFE, which both uses and can potentially leach components or break down to per- and polyfluoroalkyl substances (PFAS). Using spandex as a binder is thus a more environmentally friendly alternative. Spandex is also considerably cheaper compared to its fluorinated counterparts.

As used herein, spandex is defined as the generic term as defined by the US federal trade commission. In one embodiment spandex is a fiber comprising at least 85% by weight of a segmented polyurethane. That is, an elastomeric polyurethane fiber comprising at least 85wt% segmented polyurethane-based polymer according to the disclosure may be referred to as spandex.

In one embodiment, the elastomeric polyurethane fiber is spandex. Suitable spandex fibers are for example Arachra® from TK chemical Corp, Korea; Roica™ from Asahi Kasei, Japan; Elafit™ from Taekwang Indsutrial Co, Ltd., Korea; and creora® from Hyosung TNC, Korea. The spandex is preferably from a recycled material, such as recycled textiles.

The elastomeric polyurethane of the disclosure may be in fiber form, particle form, or granules.

The elastomeric polyurethane fiber of the disclosure is preferably in the form of a fiber.

In one embodiment, the elastomeric polyurethane fibers are spun from a composition of the segmented polyurethane-based polymer. The fibers may be, for example, but not limited to, dry spun, wet spun or melt spun. In one nonlimiting embodiment, the fibers are dry spun.

The elastomeric polyurethane fiber may be a staple fiber.

Preferably the length of elastomeric polyurethane fiber is larger than the largest dimension of the ceramic material particle, more preferably more than 5 times larger.

Preferably, the elastomeric polyurethane fiber has a length of between 100-1000 μm, for instance 100-800 μm, or 200-600 μm.

In one embodiment, the thickness of the elastomeric polyurethane fiber is from about 2 den to about 60 den, preferably from about 10 den to about 60 den, more preferably from about 20 den to about 50 den, even more preferably from about 30 den to about 50 den, most preferably from about 35 den to about 45 den. The thickness may be determined by any suitable method, for example ASTM D2591 - 07(2020).

In a further embodiment, the thickness of the elastomeric polyurethane fiber is about 40 den.

By "elastomeric" is meant that the polyurethane is deformable and may return to its original shape if deformed. In other words, elastomeric polyurethane is not rigid and may be deformed.

Fibers of elastomeric polyurethane according to the disclosure typically have an excellent elongation at break, for instance as measured with the general method of ASTM D 2731-72.

In an example, three fibers, a 2-inch (5-cm) gauge length and a 0-300% elongation cycle are used for each of the measurements. The samples are cycled five times at a constant elongation rate of 50 centimeters per minute. Load power (5TP300), the stress on the polyurethane or polyurethane urea binder during the fifth cycle at 300% extension, is reported as gram-force for a given decitex. Unload power (5TM100) is the stress at an extension of 100% for the fifth unload cycle and is also reported in gram-force. Percent elongation at break is measured on a sixth extension cycle.Percent set was also measured on samples that had been subjected to five 0-300% elongation/relaxation cycles. The percent set, %SET, was then calculated as % SET = 100 × Lf - Lo / Lo where Lo and Lf are respectively the fiber length when held straight without tension before and after the five elongation/relaxation cycles.

The flatness index of stretch and recovery of the elastomeric polyurethane fibers may be determined by the ratio of 5TM100/5TP300, which was the ratio of the recovery power or unload power at 100% extension to the stretch power or load power at 300% extension measured in the fifth 0-300% stretch/recovery cycles.

Preferably the elastomeric polyurethane fiber has an elongation at break of at least 300%, for example at least 400%, at least 500%, or at least 600%.

The term "elongation at break" may be used interchangeably with the phrase "possible elongation" within the context of the disclosure.

In one embodiment, the possible elongation of the elastomeric polyurethane fiber is from about 500% to about 800%, or from about 600% to about 700%.

In a further embodiment, the possible elongation of the elastomeric polyurethane fiber is about 650%.

Preferably, elastomeric polyurethane fiber has an excellent flat stretch/recovery determined by a 5TM100/5TP300 ratio of greater than 0.09.

Preferably, the elastomeric polyurethane when in fiber form has a SET% of less than 20, more preferably less than 16%.

In the context of the disclosure "elastomeric" usually refers to a polyurethane that when in the form of a fiber has;

(i) an elongation at break of at least 300%, for example at least 400%, at least 500%, or at least 600%; and/or
(ii) a possible elongation of the fiber from about 500% to about 800%, or from about 600% to about 700%; and/or
(iii) flat stretch/recovery determined by a 5TM100/5TP300 ratio of greater than 0.09; and/or
(iv) a SET% of less than 20, more preferably less than 16%.

In a second aspect the present disclosure relates to a cathode material comprising the binder according to the present disclosure, a cathode active material and optionally a conductive material.

Preferably, the conductive material comprises CNT, CNF, graphene, carbon black, or a combination thereof.

The cathode active material may comprise active material selected from at least one of nickel manganese cobalt oxide (NMC), lithium iron phosphate (LFP), nickel cobalt manganese aluminum (NMCA), lithium manganese nickel oxide (LMNO), or a lithium manganese oxide (LMO).

Preferably, the cathode active material is a transition metal complex such as layered lithium metal oxide ($LiMO_2$) cathode materials, wherein the metal is typically nickel. Even more preferably, the cathode active material is a lithium nickel manganese cobalt oxide (NMC), such as a high nickel lithium nickel manganese cobalt oxide (high Ni NMC) or lithium rich lithium nickel manganese cobalt oxide (Li rich NMC).

In some embodiments, the cathode active material comprises lithium nickel cobalt manganese oxides (NMC) ($Li_bNi_{1-x-y}Co_xMn_yA_zO_2$ ($0<x+y<1$)), where A is an element other than Li, Ni, Co, Mn or O and wherein $0\leq z\leq 0.05$, preferably $0<z\leq 0.03$, more preferably $0.001<z\leq 0.01$, and wherein $0.9\leq b\leq 1.2$. A is one or more chosen from the group Al, B, Zr, Ba, Ca, Ti, Mg, Ta, Nb, V, Fe, Ru, Re, Pt and Mo. Preferably, A is chosen from the group Al and Zr.

In preferred embodiments, the NMC cathode materials are lithium rich. As such, the cathode active material typically comprises lithium nickel cobalt manganese oxides (NMC) represented by the formula $Li_bNi_{1-x-y}Co_xMn_yA_zO_2$ ($0<x+y<1$), where A is an element other than Li, Ni, Co, Mn or O and wherein $0\leq z\leq 0.05$, preferably $0<z\leq 0.03$, more preferably $0.001<z\leq 0.01$, and wherein $1.05\leq b\leq 1.2$. A is one or more chosen from the group Al, B, Zr, Ba, Ca, Ti, Mg, Ta, Nb, V, Fe, Ru, Re, Pt and Mo. Preferably, A is chosen from the group Al and Zr.

In preferred embodiments, the NMC cathode materials are high in nickel. As such, the cathode active material typically comprises lithium nickel cobalt manganese oxides (NMC) represented by the formula $Li_bNi_{1-x-y}Co_xMn_yA_zO_2$, wherein $0<x+y<0.4$, preferably $0<x+y<0.25$, and wherein $0\leq z\leq 0.05$, preferably $0<z\leq 0.03$, more preferably $0.001<z\leq 0.01$, and wherein $0.9\leq b\leq 1.2$. A is one or more chosen from the group Al, B, Zr, Ba, Ca, Ti, Mg, Ta, Nb, V, Fe, Ru, Re, Pt and Mo. Preferably, A is chosen from the group Al and Zr.

The ratio of the nickel of the high-nickel NMC material may range from 33 mol% to 98 mol %. Preferably, the ratio may range from 60 mol% to 95 mol%. Even more preferably, the ratio may range from 80 mol% to 95 mol%.

In preferred embodiments, the NMC cathode materials is defined as $Li_bNi_{1-x-y}Co_xMn_yA_zO_2$, wherein $0<x+y<0.4$, preferably $0<x+y<0.25$, and wherein $0\leq z\leq 0.05$, preferably $0.002\leq z\leq 0.03$, more preferably $0.001<z\leq 0.01$, and wherein $0.9\leq b\leq 1.1$. A is one or more chosen from the group Al, B, Zr, Ba, Ca, Ti, Mg, Ta, Nb, V, Fe, Ru, Re, Pt and Mo. Preferably, A is chosen from the group Al and Zr.

In an embodiment is a cathode material (i.e. a composition for a cathode) comprising an elastomeric polyurethane, HNBR, a cathode active material and optionally a conductive material.

In some embodiments, the composition for a cathode is a slurry and further comprises a solvent such as NMP or NBP.

When the cathode material (i.e. the composition for a cathode) is a slurry, the HNBR may be considered a dispersant for the components of the slurry.

The slurry may be used to prepare a cathode.

That is, in an embodiment, is a method for preparing a cathode comprising a binder according to the disclosure, the method comprising:

- providing a cathode active material, an elastomeric polyurethane, optionally HNBR and optionally a conductive additive;
- dispersing the cathode material, elastomeric polyurethane, optional HNBR and optional conductive additive in a solvent to form a slurry;
- coating a substrate with the slurry; and
- removing the solvent.

When a slurry is used to form a cathode, the elastomeric polyurethane and optional HNBR typically dissolve in the solvent. This ensures the cathode binder is fully distributed through the cathode following deposition.

In a third aspect, the present disclosure relates to a cathode for a secondary cell comprising a cathode binder wherein the binder comprises an elastomeric polyurethane.

Typically, the conductive material is present in the cathode from 0.1 to 3 wt%, such as from 0.1 to 2 wt%, or from 0.2 to 1.5 wt%, such as from 0.3 to 1.2 wt%.

Typically, the cathode binder is present in the cathode from 0.1 to 3 wt%, such as from 0.1 to 2 wt%, or from 0.2 to 1.5 wt%, such as from 0.3 to 1.2 wt%.

Typically, the cathode active material is present in the cathode from 94 to 99.8 wt%, such as from 96 to 99.8 wt%, or from 97 to 99.6 wt%, such as from 97.6 to 99.4 wt%.

In one embodiment, the cathode is an NMC-, LFP-, NMCA-, LMNO-, or an LMO-cathode, preferably an NMC- or LFP- cathode, more preferably an NMC-cathode.

The cathode may have a surface layer comprising a thin layer comprising an inert material selected from the group consisting of Al, B, Cu, $Al_2O_3$, TiOz, ZnO, LiF, LazOs, $NbO_2$, $ZrO_2$, LizO, $HfO_2$, GaOz, $GeO_2$, $CeO_2$, MgO, CaO,

$AlF_3$, $LiAlF_4$, $MgF_2$, $Zn_2OF_2$, $Li_3FO$, $LiCF_5$, $Li_3N$, TiN, $Li_2CO_3$, $CaCO_3$, $ZnCO_3$, $La_2(CO_3)_3$, $Nb(CO_3)_2$, $MgCO_3$, $Li_2S$, ZnS, $GaS_2$, $TiS_2$, $NbS_2$, $HfS_2$, CaS, $La_2S_3$, $BaSO_4$, $Li_3PO_4$, $AlPO_4$, $WF_4$, $W(PO_4)_2$ , $SiO_2$, SiC, Si, carbon, or mixtures of any two or more thereof. In some embodiments, the inert material comprises a hafnium oxide, lithium hafnium oxide, a lithium fluoride-lithium carbonate composite, or composite materials containing LiF, $La_2O_3$, $NbO_2$, $ZrO_2$, $Li_2O$, G $GaO_2$, $GeO_2$, $CeO_2$ , MgO, CaO, $AlF_3$, $LiAlF_4$, $MgF_2$, $Zn_2OF_2$, $Li_3FO$, $LiCF_5$, $Li_3N$, TiN, $Li_2CO_3$, $CaCO_3$, $ZnCO_3$, $La_2(CO_3)_3$, $Nb(CO_3)_2$, $MgCO_3$, $Li_2S$, ZnS, $GaS_2$, $TiS_2$, $NbS_2$, $HfS_2$, CaS, $La_2S_3$, $BaSO_4$, $Li_3PO_4$, $AlPO_4$, $WF_4$, $W(PO_4)_2$, lithium niobium oxides, lithium hafnium oxides and lithium lanthanum oxides, lithium silicon oxide, or lithium aluminum phosphate ($Li_xAl_y(PO_4)_z$), or mixtures of any two or more thereof.

As stated above, the elastomeric polyurethane, for instance spandex fibers, used in the present disclosure are environmentally benign compared to other binder components, such as fluorinate PVDF or PTFE. Replacing those fluorinated binder components to an elastomeric polyurethane such as spandex is an improvement of the environment at large, but also an improvement of the working environment during assembly of the cells. In addition, the elastomeric polyurethane such as spandex fibers may be produced from recycled materials using much cheaper processes as compared to the production of the PVDF or PTFE.

Solvent

In addition, the inventors have found that the process for preparing the cathode material may be significantly improved as well, such as by using less toxic components. The cathode material of the present disclosure may be prepared by dispersing the cathode material in a safe solvent such as 1-butylpyrrolidin-2-one (NBP), rather than in the conventional solvent *N*-methyl-2-pyrrolidone (NMP). The process improvements of this substitution are large. Not only does the elastomeric polyurethane such as spandex disperse significantly quicker in the safe solvents such as NBP than PVDF does in NMP, safe solvents also provide a number of other benefits. For example, NBP is also considered non-toxic, biodegradable and has a lower volatility compared to NMP. Furthermore, NMP has been classified as a developmental- or geno-toxic solvent that is facing increasing regulatory pressure. The main benefit of NBP is its non-toxic nature, greatly improving the working environment and reducing costs for precautionary measures that otherwise needs to be taken.

A secondary cell comprising a binder according to the present disclosure and prepared by using NBP will considerably increase its sustainability.

Thus, in a fourth aspect, the present disclosure relates to a method for preparing a cathode comprising a binder, wherein the binder comprises an elastomeric polyurethane, and wherein the method comprises dispersing a cathode material comprising said binder and a conductive material in a solvent such as NBP, followed by coating a substrate and removing the solvent.

In a fifth aspect, the present disclosure relates to a secondary cell comprising an anode, a cathode, an electrolyte, and optionally a separator, characterized in that the secondary cell further comprises a cathode binder and optionally a conductive material, wherein the binder comprises an elastomeric polyurethane.

The electrolyte used in the secondary cell according to the present disclosure is a liquid electrolyte comprising at least one lithium salt and at least one or more solvents selected from the group consisting of carbonate solvents and their fluorinated equivalents, di$C_{1-4}$ ethers and their fluorinated equivalents and ionic liquids. The lithium salt is preferably one or more selected from the group consisting of lithium hexafluorophosphate ($LiPF_6$), lithium bis(fluorosulfonyl)imide (LiFSI), lithium bis(trifluoromethanesulfonyl)imide (LiTFSI), lithium (fluorosulfonyl) (trifluoromethanesulfonyl) imide (LiFTFSI), lithium bis(pentafluoroethanesulfonyl)imide (LiBETI), lithium (pentafluoroethanesulfonyl)(trifluoromethanesulfonyl)imide (LiPTFSI), lithium trifluoromethanesulfonate (LiOTf), lithium bis(oxalato)borate (LiBOB), lithium difluoro(oxalato)borate (LiDFOB), lithium difluorobis(oxalato)phosphate (LiDFOP), lithium tetrafluoro(oxalato)phosphate (LiT-FOP), lithium tetrafluoroborate ($LiBF_4$), lithium nitrate (LiNOs) lithium 2-trifluoromethyl-4,5-dicyanoimidazole (LiTDI). In one embodiment, the solvent is selected from the group consisting of 1,2-dimethoxyethane (DME), *N*-propyl-*N*-methylpyrrolidinium bis(fluorosulfonyl)imide (PYR13-FSI), *N*-propyl-*N*-methylpyrrolidinium bis(trifluoromethanesulfonyl)imide (PYR13-TFSI), 1-butyl-1-methylpyrrolidinium bis(fluorosulfonyl)imide (PYR14-FSI), 1-butyl-1-methylpyrrolidinium bis(trifluoromethanesulfonyl)imide (PYR14-TFSI), 1-ethyl-3-methylimidazolium bis(fluorosulfonyl)imide (EMIM-FSI), 1-ethyl-3-methylimidazolium bis(trifluoromethanesulfonyl)imide (EMIM-TFSI). The solvent is preferably one or more selected from dimethyl carbonate (DMC), ethyl methyl carbonate (EMC), diethyl carbonate (DEC), ethylene carbonate (EC), and propylene carbonate (PC), and their fluorinated equivalents.

In one embodiment, the secondary cell comprises an NMC cathode.

In a further aspect, the present disclosure relates to a vehicle comprising a secondary cell according to the fifth aspect of the present disclosure.

As used herein, the term "about" refers to a value or parameter herein that includes (and describes) embodiments that are directed to that value or parameter per se. For example, description referring to "about 50" includes description of "50." Numeric ranges are inclusive of the numbers defining the range. Generally speaking, the term "about" refers to the indicated value of the variable and to all values of the variable that are within the experimental error of the indicated value (e.g., within the 95% confidence interval for the mean) or within 10 percent of the indicated value, whichever is greater.

All aspects and embodiments disclosed herein can be combined with any other aspect and/or embodiment disclosed herein.

EXAMPLES

**Preparation of cathode material**

*Materials*

- Binder solution: Spandex (Taekwong) in NBP
- Conductive material: CNT, CNF, graphene, carbon black, etc., and dispersant (HNBR)
- Solvent: NBP
- Active material (NMC or LFP)

Binder solution and solution of conductive material (5 wt%) in NBP, are mixed until homogeneity is achieved. Active material is added to the mixture, followed by further mixing. NBP is added, followed by further mixing. The mixture is then applied on a clean Al foil, using a standard coater. The coated foil is fixed onto a glass plate and dried in an oven. The foil is then pressed in a jig.

Cathode compositions:

| Cathode- binder | Composition (wt%) |
|---|---|
| NMC-spandex | NMC / conductive material (CNT 3.35%, carbon 3.35%, HNBR 1.34%) / binder (spandex 8% in NBP): 97/1.5/1.5 |
| NMC-PVDF | NMC / conductive material (CNT 3.35%, carbon 3.35%, HNBR 1.34%) / binder (PVDF 8% in NBP): 97/1.5/1.5 |
| LFP-spandex | LFP / conductive material (CNT 3.35%, carbon 3.35%, HNBR 1.34%) / binder (spandex 8% in NBP): 94.5/2.5/3 |
| LFP-PVDF | LFP / conductive material (CNT 3.35%, carbon 3.35%, HNBR 1.34%) / binder (PVDF 8% in NBP): 94.5/2.5/3 |

Figure 1a shows a TEM image of a slurry of a cathode material comprising a conventional PVDF binder. It is clear that the material is unevenly dispersed in the slurry. Figure 1b, however, shows a slurry of a cathode material comprising a spandex binder of the present disclosure. As can be seen, the material is much more evenly distributed in the slurry.

**Example 1. Transition metal dissolution**

The dissolution of transition metals from the cathodes was investigated using NMC cathodes with two different binders. Two coin half cells with different respective cathode binders with lithium metal counterparts were charged to 4.3 V, and then stored for 7 days at 60 °C, after which ICP-MS measurements were made. The results are shown in table 1.

*Table 1. Metal dissolution from cathodes comprising two different binders.*

| NMC cathode with a binder | Ni (ppm)* | Co (ppm)* | Mn (ppm)* | Zr (ppm)* |
|---|---|---|---|---|
| Present spandex binder | 2.8 | 0.4 | 0.2 | 0.08 |
| PVDF | 4 | 1.1 | 0.4 | 0.07 |
| *Average of three runs. | | | | |

Compared to a conventional PVDF binder, the present spandex binder reduces the Nickel dissolution by 43%, the Cobalt dissolution by 175%, and the Manganese dissolution by 100%. The Zirconium dissolution is not very affected. This is likely due to the fact that Zirconium is merely a dopant that is present in very low amounts.

**Example 2. Peel strength**

The particle-particle cohesion and particle-substrate adhesion was demonstrated by testing the peel strength of two different cathode active materials with three different respective binders. The peel strength of the cathodes was measured using a tensile testing machine (Mecmesin Multitest 2.5 dV). A double-stranded tape was securely attached to a microscope glass slide, leaving 2.5 cm of the slide uncovered. The opposite cover paper of the tape was then removed, and the glue-side was pressed onto the cathode material. The extra cathode material was cut off around the glass slide, leaving 1 cm cathode material from the short edge of the glass slide. The cathode material was then peeled off half-way from the glass slide. The glass slide end with the cathode material peeled off was attached to the bottom grip of the tensile tester, and the peeled-off cathode material was attached to the top grip of tensile tester. The tensile tester was then started and the results for the different cathodes are shown in table 2 and in figure 2.

*Table 2. The peel strength of the different cathodes.*

| Cathode - binder | Peel strength (N/m) |
|---|---|
| NMC-PVDF | 17,74 |
| NMC-present spandex binder | 21,34 |
| LFP-PVDF | 5,37 |
| LFP-W* | 3,7 |
| LFP-present spandex binder | 83,34 |
| *Average of three runs. **W is a water-based slurry with CMC and acrylic acid emulsion as the binder. | |

As shown in table 2, the spandex binder provides both NMC and LFP cathodes with a significantly higher peel strength, compared to the conventional PVDF binder. In particular for the LFP cathode, the peel strength was improved by a factor of 15.5. For the NMC cathode, the peel strength is significantly improved by 20%. The results are shown in figure 2.

**Example 3. Discharge rate test**

Discharge rate tests for NMC and LFP cathodes, respectively, were performed. Each cathode was tested in two coin half cells with spandex binder and PVDF binder, respectively, and identical lithium metal counterparts. The half cells were charged with a charging rate of 0.2 C and a CC-CV cutoff at 4.3 V. Discharges were then performed using 0.2 C, 0.33 C, 1 C, 2 C, 5 C, and 10 C, with a cutoff CC at 2.8 V. The results are shown in tables 3 and 4 below, and in figure 3.

*Table 3. Difference in current output and capacity retention between coin half cells comprising NMC cathodes comprising two different binders, respectively.*

| C-rate Discharg e | Current output PVDF binder (mAh/g)* | Current output present spandex binder (mAh/g) * | Capacity retention PVDF binder (%)* | Capacity retention present spandex binder (%)* |
|---|---|---|---|---|
| 0.2 C | 213,11 | 213,14 | 100 | 100 |
| 0.33 C | 209,56 | 209,89 | 98,34 | 98,48 |
| 1 C | 197,00 | 200,34 | 92,44 | 94,00 |
| 2 C | 189,65 | 192,45 | 88,99 | 90,29 |
| 5 C | 171,87 | 180,38 | 80,65 | 84,63 |
| 10 C | 125,68 | 159,26 | 58,98 | 74,72 |
| *Average of three runs. | | | | |

*Table 4. Difference in current output and capacity retention between coin half cells comprising LFP cathodes comprising two different binders, respectively.*

| C-rate Discharg e | Current output PVDF binder (mAh/g)* | Current output present spandex binder (mAh/g) * | Capacity retention PVDF binder (%)* | Capacity retention present spandex binder (%)* |
|---|---|---|---|---|
| 0.2 C | 157,57 | 158,10 | 100 | 100 |
| 0.33 C | 155,19 | 156,03 | 98,49 | 98,69 |
| 1 C | 143,46 | 145,62 | 91,05 | 92,11 |
| 2 C | 129,28 | 133,92 | 82,05 | 84,71 |
| 5 C | 106,41 | 109,80 | 67,53 | 69,45 |
| 10 C | 75,00 | 85,60 | 47,60 | 54,14 |
| *Average of three runs. | | | | |

As shown in table 3, both the current output and the capacity retention is slightly better for the present spandex binder during lower discharge rates. However, improvements are significant for the higher discharge rates, 5 C and 10 C. As seen in table 3, both the current output and the capacity retention are improved by 27% at a discharge rate of 10 C.

**Example 4. Cycle life test**

Cycle life tests were performed on two coin half cells with NMC cathodes comprising spandex binder and PVDF binder, respectively, and identical lithium metal counterparts. One cycle consisted of charging with a charging rate of 0.5 C and a CC-CV cutoff at 4.3 V, followed by discharging with a rate of 1 C and a 2.8 V CC cutoff. Fifty cycles were performed, and the discharge capacity was measured after each cycle. The results are shown in figure 4a and 4b. Figure 4a shows the discharge capacity and figure 4b shows the capacity retention over each cycle. The half cell comprising the cathode with the spandex binder of the present disclosure improves the cycle life, as the capacity retention is 98.7% after 50 cycles, whereas the cathode comprising a conventional PVDF binder show a capacity retention of 93.9%.

**Claims**

1. A cathode for a secondary cell comprising a cathode binder, wherein the binder comprises an elastomeric polyurethane.

2. The cathode according to claim 1, wherein the elastomeric polyurethane is a polyurethane-based polymer comprising segments of polyether and polyurea.

3. The cathode according to any preceding claim, wherein the elastomeric polyurethane is a polyurethane-based polymer that has a molecular weight ratio of the soft segment to the hard segment larger than 12.0, and a urea hard segment weight percent less than 7.8.

4. The cathode according to any preceding claim, wherein the binder further comprises HNBR.

5. The cathode according to any preceding claim, wherein the binder comprises (or consists of)

   from about 95 wt% to about 99.9 wt% elastomeric polyurethane;
   from about 0.1 wt% to about 2 wt% HNBR;
   optionally up to 3 wt% antioxidant;
   optionally up to 3 wt% lubricant such as PDMS or clay.

6. The cathode according to any preceding claim, wherein the cathode further comprises a conductive material selected from CNT, CNF, graphene, carbon black, or a combination thereof.

7. The cathode according to any preceding claim, wherein the cathode further comprises a cathode active material selected from at least one of nickel manganese cobalt oxide (NMC), lithium iron phosphate (LFP), nickel cobalt manganese aluminum (NMCA), lithium manganese nickel oxide (LMNO), or a lithium manganese oxide (LMO).

**8.** The cathode according to claim 7, wherein the cathode active material is a lithium nickel cobalt manganese oxides (NMC) represented by the formula $Li_bNi_{1-x-y}Co_xMn_yA_zO_2$, wherein $0<x+y<0.4$, wherein $0 \leq z \leq 0.05$, wherein $0.9 \leq b \leq 1.2$, and wherein A is one or more chosen from the group Al, B, Zr, Ba, Ca, Ti, Mg, Ta, Nb, V, Fe, Ru, Re, Pt and Mo.

**9.** A secondary cell comprising the cathode of any preceding claim.

**10.** A vehicle comprising the secondary cell according to claim 9.

**11.** A method for preparing a cathode according to any one of claims 1-8, comprising

providing a cathode material, an elastomeric polyurethane, optionally HNBR and optionally a conductive additive;
dispersing the cathode material, elastomeric polyurethane, optional HNBR and optional conductive additive in a solvent to form a slurry;
coating a substrate with the slurry; and
removing the solvent.

**12.** The method according to claim 11, wherein the solvent is 1-butylpyrrolidin-2-one (NBP).

**13.** A cathode binder comprising (or consisting of)

from about 95 wt% to about 99.9 wt% elastomeric polyurethane;
from about 0.1 wt% to about 2 wt% HNBR;
optionally up to 3 wt% antioxidant;
optionally up to 3 wt% lubricant such as PDMS or clay.

**14.** The cathode binder of claim 13, wherein the elastomeric polyurethane is a polyurethane-based polymer comprising segments of polyether and polyurea.

**15.** The cathode binder according to claim 13 or claim 14, wherein the elastomeric polyurethane is a polyurethane-based polymer that has a molecular weight ratio of the soft segment to the hard segment larger than 12.0, and a urea hard segment weight percent less than 7.8.

FIGURE 1

a)

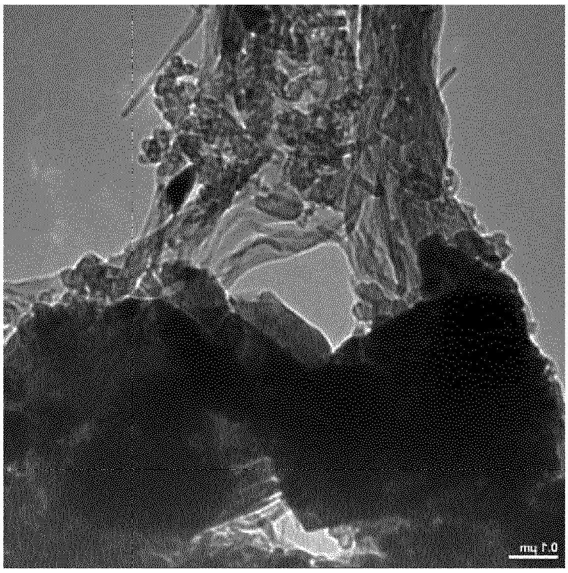

b)

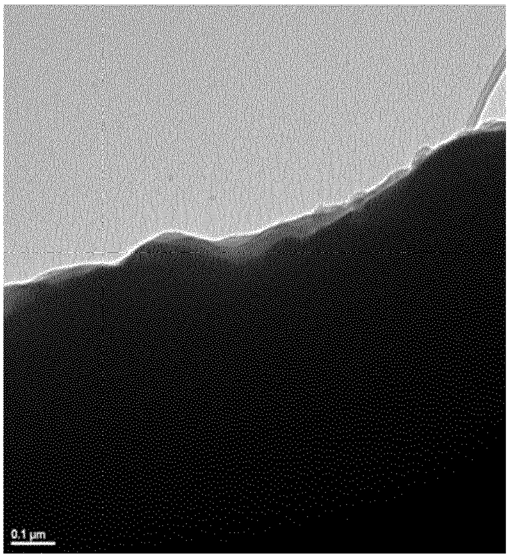

FIGURE 2

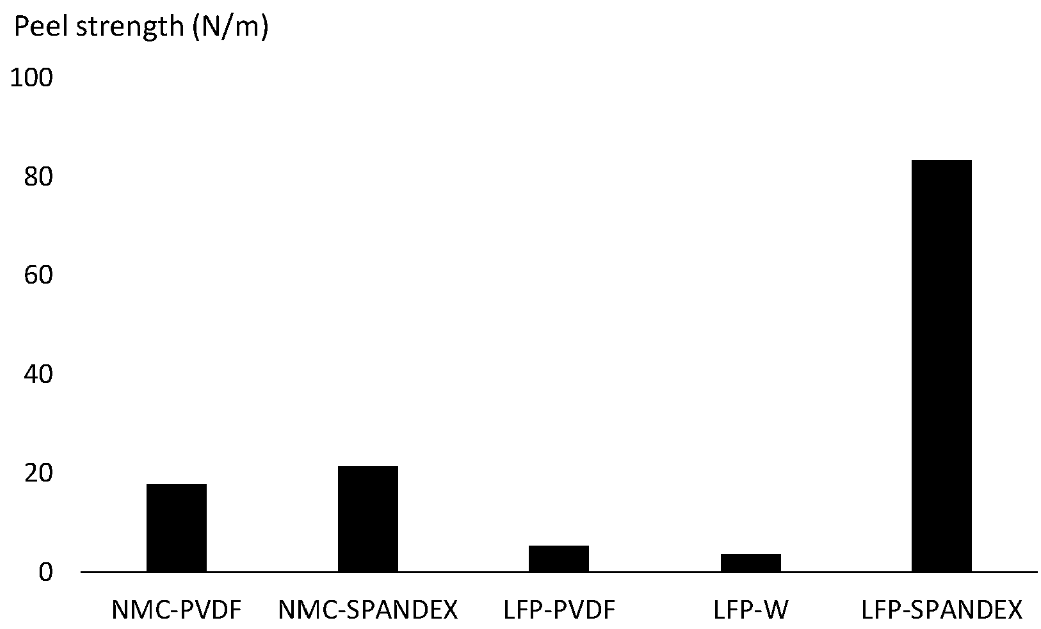
Peel strength (N/m)
100
80
60
40
20
0
NMC-PVDF
NMC-SPANDEX
LFP-PVDF
LFP-W
LFP-SPANDEX

FIGURE 3

a)

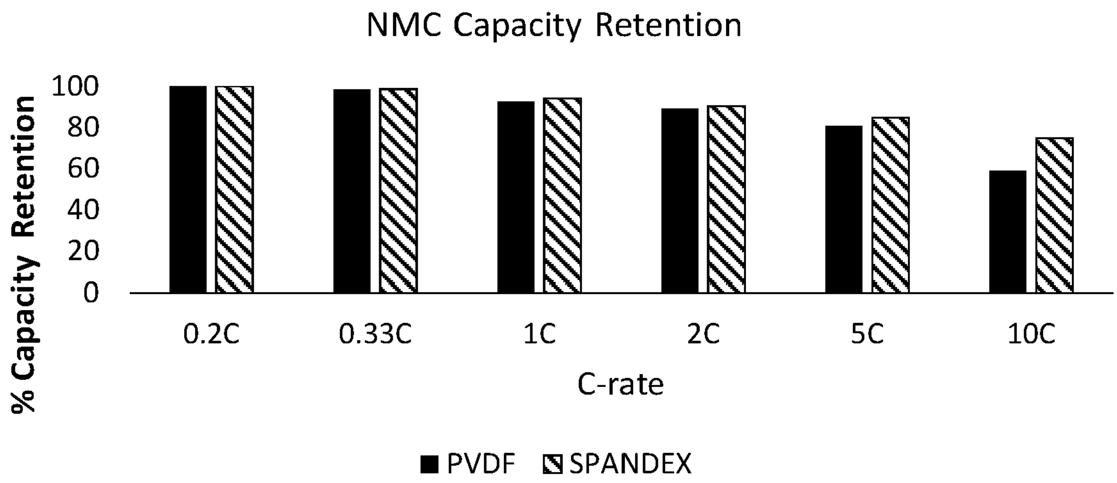
NMC Capacity Retention
% Capacity Retention
100
80
60
40
20
0
0.2C
0.33C
1C
2C
5C
10C
C-rate
PVDF
SPANDEX

b)

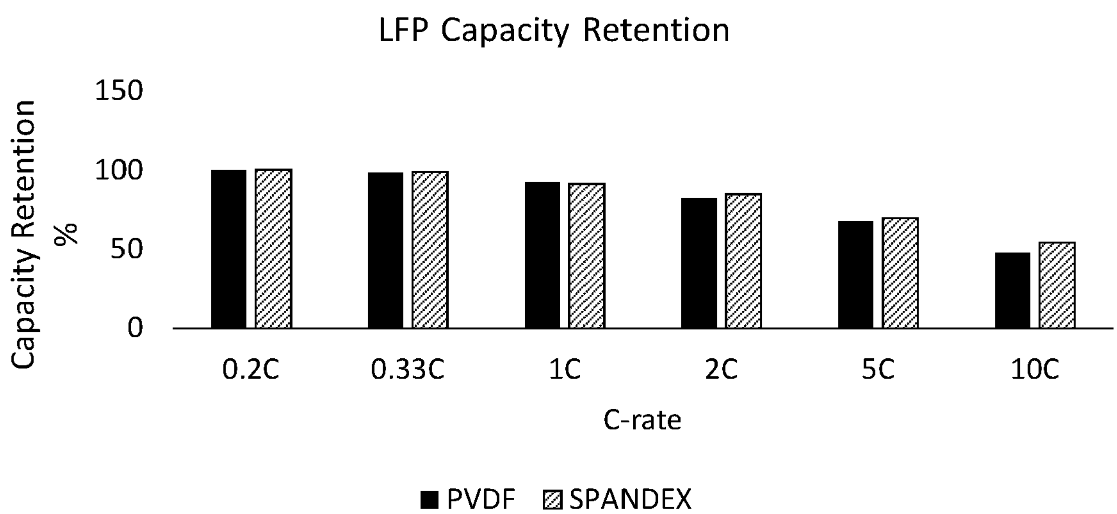
LFP Capacity Retention
Capacity Retention
%
150
100
50
0
0.2C
0.33C
1C
2C
5C
10C
C-rate
PVDF
SPANDEX

FIGURE 4

a)

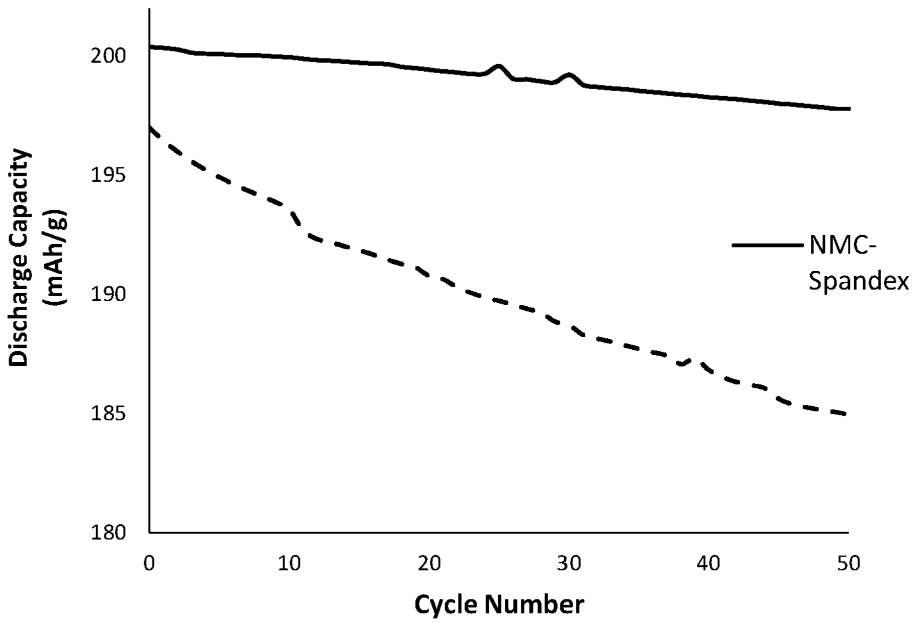
Discharge Capacity (mAh/g)
200
195
190
185
180
0
10
20
30
40
50
Cycle Number
NMC-Spandex

b)

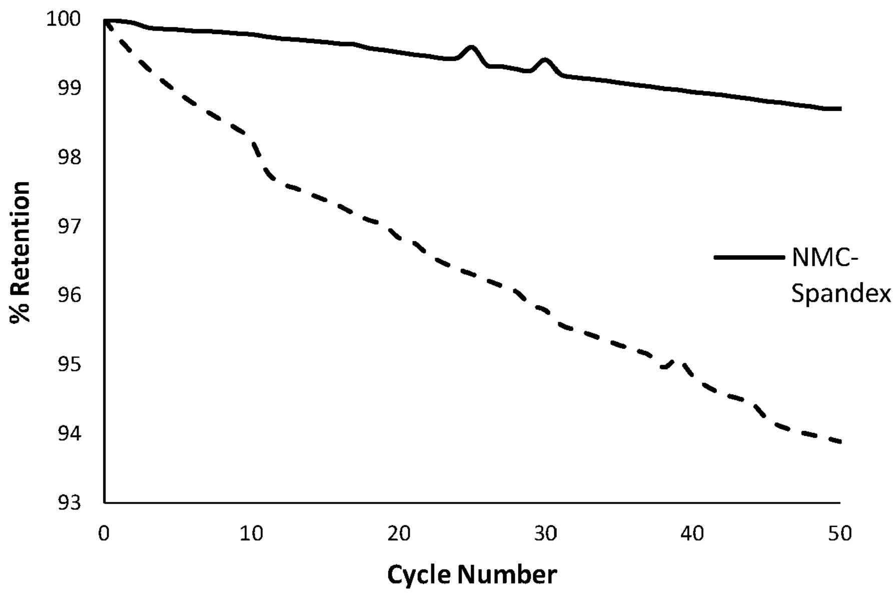
% Retention
100
99
98
97
96
95
94
93
0
10
20
30
40
50
Cycle Number
NMC-Spandex

Europäisches Patentamt
European Patent Office
Office européen des brevets

# EUROPEAN SEARCH REPORT

Application Number
EP 24 18 7328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHANG BARSA ET AL: "Highly Elastic Binder for Improved Cyclability of Nickel-Rich Layered Cathode Materials in Lithium-Ion Batteries", ADVANCED ENERGY MATERIALS , vol. 10, no. 29 22 June 2020 (2020-06-22), XP093212628, DE ISSN: 1614-6832, DOI: 10.1002/aenm.202001069 Retrieved from the Internet: URL:https://onlinelibrary.wiley.com/doi/full-xml/10.1002/aenm.202001069 * abstract * * Section 2. Results and Discussion * * Section 4, Preparation of Electrode and Cell * ----- | 1,2,6-12 | INV. H01M4/131 H01M4/1391 H01M4/62 H01M10/0525 ADD. H01M4/02 |
| X | YONG-HEE LEE ET AL: "Low Molecular Weight Spandex as a Promising Polymeric Binder for LiFePO 4 Electrodes", ADVANCED ENERGY MATERIALS, vol. 7, no. 8, 19 December 2016 (2016-12-19), page 1602147, XP055551461, DE ISSN: 1614-6832, DOI: 10.1002/aenm.201602147 | 1-3,6,7, 9-12 | TECHNICAL FIELDS SEARCHED (IPC) |
| Y | * page 1, left-hand column, paragraph first * * Section experimental section, cell preparation * ----- -/-- | 4,5, 13-15 | H01M |

The present search report has been drawn up for all claims

| Place of search | Date of completion of the search | Examiner |
|---|---|---|
| The Hague | 8 October 2024 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

page 1 of 2

Europäisches Patentamt
European Patent Office
Office européen des brevets

# EUROPEAN SEARCH REPORT

Application Number
EP 24 18 7328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/187646 A1 (KO BYOUNG HO [KR] ET AL) 15 June 2023 (2023-06-15)<br>* abstract *<br>* paragraph [0061] *<br>* paragraph [0069] *<br>----- | 4,5, 13-15 | |
| T | CHITRE ANIKET ET AL: "Towards a More Sustainable Lithium-Ion Battery Future: Recycling LIBs from Electric Vehicles", BATTERIES & SUPERCAPS<br>,<br>vol. 3, no. 11<br>21 July 2020 (2020-07-21), pages 1126-1136, XP093212663,<br>ISSN: 2566-6223, DOI: 10.1002/batt.202000146<br>Retrieved from the Internet:<br>URL:https://chemistry-europe.onlinelibrary.wiley.com/doi/pdfdirect/10.1002/batt.202000146<br>* Section 3.2 Binder material *<br>----- | | |
| | | | TECHNICAL FIELDS SEARCHED (IPC) |

The present search report has been drawn up for all claims

1

| Place of search | Date of completion of the search | Examiner |
|---|---|---|
| The Hague | 8 October 2024 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 24 18 7328

This annex lists the patent family members relating to the patent documents cited in the above-mentioned European search report. The members are as contained in the European Patent Office EDP file on The European Patent Office is in no way liable for these particulars which are merely given for the purpose of information.

08-10-2024

| Patent document cited in search report | Publication date | Patent family member(s) | Publication date |
|---|---|---|---|
| US 2023187646 A1 | 15-06-2023 | CN 116264275 A | 16-06-2023 |
| | | EP 4210122 A2 | 12-07-2023 |
| | | KR 20230089468 A | 20-06-2023 |
| | | US 2023187646 A1 | 15-06-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019118604 A1